# EUROPEAN PATENT APPLICATION

(11) **EP 2 209 072 A1**
(43) Date of publication of application: **21.07.2010**
(21) Application number: 08847841.7
(22) Date of filing: 04.11.2008
(51) Int. Cl.: G06F 17/30, G06F 3/023

(54) **INFORMATION RETRIEVAL DEVICE**

(30) Priority: 08.11.2007 JP 2007290908; 12.11.2007 JP 2007293238
(71) Applicant: Honda Motor Co., Ltd., Minato-ku Tokyo 107-8556 (JP)
(72) Inventor: KONDO, Keisuke, Wako-shi Saitama 351-0193 (JP); KINOSHITA, Hirofumi, Wako-shi Saitama 351-0193 (JP); MURAYAMA, Toru, Wako-shi Saitama 351-0193 (JP)
(74) Representative: Prechtel, Jörg
(86) International application number: PCT/JP2008/070018
(87) International publication number: WO 2009/060817

(57) **Abstract**

An information retrieval device is provided with an input operation means that can input a character through an operation of a user, a database that stores data of a plurality of character strings in advance, an information extraction means that checks the character string inputted by the input operation means with the data of the character strings stored at the database to extract the data of the character string corresponding to the character string inputted by the input operation means from the database, and a display means that displays the character string extracted by the information extraction means, wherein the information extraction means is **characterized in** replacing each character in the character string inputted by the input operation means and in at least one of the character strings stored in the database by a character contained in a classified character group predetermined in accordance with an attribute of each character to carry out the check.

## Description

### TECHNICAL FIELD

The present invention relates to an information retrieval apparatus and an input apparatus.
Priority is claimed on Japanese Patent Application No. 2007-290908, filed November 8, 2007, and Japanese Patent Application No. 2007-293238, filed November 12, 2007, the contents of which are incorporated herein by reference.

### BACKGROUND ART

A conventionally known information retrieval apparatus, used in a vehicle navigation apparatus, checks a character string inputted by a user with a character string data stored in a database, and outputs matching character string data to a display apparatus (see for example Patent Document 1).

In the information retrieval apparatus described in Patent Document 1, common character strings are determined among character string data extracted from the database, and candidate data extracted while omitting the common character strings thus obtained is then outputted to an output unit. According to this information retrieval apparatus, since a great many pieces of character string data containing the common character strings are not displayed, it becomes easy to search for retrieval target data among the candidate data outputted to the output unit.

Furthermore, there is a conventionally-known apparatus which, when a user performing an input operation selects an index corresponding to a plurality of groups which a plurality of input keys have been divided in beforehand, displays input keys belonging to the group corresponding to the selected index on a display screen (see for example Patent Document 2 and Patent Document 3)
Patent Document 1: Japanese Unexamined Patent Application Publication No. 2007-94937
Patent Document 2: Japanese Unexamined Patent Application Publication No. H06-202784
Patent Document 3: Japanese Unexamined Patent Application Publication No. 2003-256117

### DISCLOSURE OF THE INVENTION

### PROBLEMS TO BE SOLVED BY THE INVENTION

In the conventional information retrieval apparatus, while it becomes easier for the user to limit candidates following data extraction, accurate candidate data cannot be output unless the user correctly inputs a character string that matches a piece of character string data in the database. For example, when acquiring facility information from the database, if the name of the facility includes letters of the alphabet, special symbols (e.g. '$', blank space, '&'), a specific character string (e.g. 'and', 'with'), and the like, there is a possibility that the character string inputted by the user will not match the character string data stored in the database, and no candidates will be displayed on the output unit.
Specifically, when there is a facility with a name of, for example, 'ON and out burger', it is possible that the character string inputted by a user and the data stored in the database will contain different character strings such as 'ON-N-OUT burger', 'ON_N_OUT burger', and 'ON and out burger'. If the inputted character string and the character string stored in the database do not match exactly, no candidates are outputted for display.

Accordingly, a first object of the inventors is to provide an information retrieval apparatus which can extract data that a user desires from a database, even when inputted character strings and character strings stored in the database contain special symbols, characters, and such like.

In an apparatus according to an example of the conventional technology mentioned above, in order to select his desired input keys the user must first familiarize himself with the index for groups which his desired input keys belong to. If the user is not familiar with the input operation, it will be difficult for him to rapidly select the input keys he desires.
Moreover, when an index of a group which a great many input keys belong to is selected, depending on the arrangement of the input keys when they are displayed on the display screen, the operation that must be performed to select the desired input keys becomes complex. This leads to a problem that the time required to input characters and the like using the input keys becomes excessively long, making the apparatus less convenient.

According to, a second object of the inventors is to provide an input apparatus including input unit that can simplify the operation required to select input keys, and increase the convenience.

### MEANS FOR SOLVING THE PROBLEMS

To solve the problems mentioned above and achieve the first object, an information retrieval apparatus according to a first aspect of the invention includes: an input operation unit that can input a character through an operation of a user, a database that stores data of a plurality of character strings beforehand, an information extraction unit that checks a character string inputted by the input operation unit with the data of the character strings stored in the database, and extracts the data of a character string corresponding to the character string inputted by the input operation unit from the database, and a display unit that displays the character string extracted by the information extraction unit, wherein the information extraction unit performs the check by replacing each character in at least one of the character string inputted by the input operation unit and the character strings stored in the database with a character contained in a classified character group predetermined in compliance with an attribute of each character.

In the information retrieval apparatus according to a second aspect of the invention, the information extraction unit treats each character contained in at least one of the character string inputted by the input operation unit and the character strings stored in the database as the categorized character group.

In the information retrieval apparatus according to a third aspect of the invention, when a character string being checked contains a special symbol belonging to a predetermined special categorized character group, the information extraction unit does not check the special symbols in a one-character unit.

In the information retrieval apparatus according to a fourth aspect of the invention, when a character string being checked contains a sequence of characters belonging to a sequential character categorized character group, the information extraction unit performs the collection by replacing the sequence of characters with a sequence of characters contained in the sequential character categorized character group.

In the information retrieval apparatus according to a fifth aspect of the invention, in the information extraction unit, similar-shaped characters, and synonymous or near-synonymous characters, and character strings are each contained in a same categorized character group.

In the information retrieval apparatus according to a sixth aspect of the invention, when a character string being checked contains a special symbol belonging to a predetermined special categorized character group, the information extraction unit does not perform the check by checking the special symbol in a one-character unit, and instead performs the check by replacing a combination of the special symbol and a subsequent character thereof with characters contained in a categorized character group which the subsequent character belongs to.

In the information retrieval apparatus according to a seventh aspect of the invention, when a character string being checked contains a special symbol belonging to a predetermined special categorized character group, and this special symbol together with preceding and subsequent characters thereof form a sequence of characters that belong to a sequential character categorized character group, the information extraction does not perform the check of replacing a combination of the special symbol and a subsequent character thereof with characters contained in a categorized character group which the subsequent character belongs to, and instead performs the check by replacing the sequence of characters with a sequence of characters contained in the sequential character categorized character group.

To solve the problems mentioned above and achieve the second object, an input apparatus according to an eighth aspect of the invention includes: a display unit that displays a selectable character, a display control unit that makes the display unit display the character, an input operation unit that can input a character through an operation of a user, and a storage unit that stores a selection histories of characters selected by the input operation unit; the display control unit includes an index display control unit that sets one character contained in each of a plurality of characters divided into a plurality of groups as an index of each of the groups, and makes the display unit display it in a selectable manner, and an in-group character display control unit that makes the display unit display a plurality of characters contained in a group corresponding to an index selected through an operation of a user from among the indexes displayed by the display unit, and in addition, highlights any one of the plurality of characters contained in a group corresponding to the selected index as an initial selection target of that group; wherein, based on a selection history of each of the characters, the in-group character display control unit sets a character with the highest selection frequency among a plurality of characters contained in the group as the initial selection target.

In the input apparatus according to a ninth aspect of the invention, based on a selection history of each of the characters, the in-group character display control unit displays a plurality of characters contained in the group in order of their selection frequencies.

In the input apparatus according to a tenth aspect of the invention, based on a selection history of each of the characters, the input display control unit sets a character with the highest selection frequency among a plurality of characters contained in the group as the index of the group.

### EFFECTS OF THE INVENTION

According to the information retrieval apparatus of the first aspect of the invention, the information extraction unit treats characters in a character string as categorized character groups. This reduces the possibility that data whose constituent characters are slightly different will be excluded at the time of extraction. Therefore, even if the character string contains special symbol, characters, and such like, since the information extraction unit treats those special characters as categorized character groups divided beforehand, no matter which character the user selects, it can always reliably extract the data desired by the user from the database without excluding it.

According to the information retrieval apparatus according to a second aspect of the invention, when treating characters in a character string inputted from the input operation unit as categorized character groups, all characters contained in a target categorized character group are converted, and an OR search is carried out for all converted characters. Data desired by the user is thereby prevented from being excluded from the retrieval result. Furthermore, when treating characters in a character string stored in the database as categorized character groups, at the time of storing a character string containing characters treated as categorized character groups in the database, information relating to all characters in categorized character groups associated with the target character is superimposed on the stored character string data in correspondence therewith. Data desired by the user is thereby prevented from being excluded from the retrieval result.

According to the information retrieval apparatus according to a third aspect of the invention, by determining whether the inputted character contained symbols such as, for example, '#' and blank space, data desired by the user is prevented from being excluded from the retrieval result.

According to the information retrieval apparatus according to a fourth aspect of the invention, a sequence of characters such as, for example, 'and' and '-N-' are all treated as a categorized character group constituting one unit of the group.

According to the information retrieval apparatus according to a fifth aspect of the invention, for example, reference characters such as 'A' and similarly shaped characters containing a diacritical mark such as an umlaut are all treated as categorized character groups of the same group. Thus, 'Dollar' and '$', 'One' and '1', and so on, are each treated as categorized character groups of the same group.

According to the information retrieval apparatus according to a sixth aspect of the invention, through the process of a first stage, symbols such as, for example, '#' and blank space are prevented from being excluded from the extraction target by determining whether there are contained in the inputted characters; moreover, through a process of a second stage, when extracting characters that are subsequent to a symbol such as '#' and blank space, it becomes possible to differentiate between characters that are preceded by a symbol such as '#' and blank space, and characters that are not preceded by them, when setting the extraction target.

According to the information retrieval apparatus according to a seventh aspect of the invention, characters formed from a sequence of characters such as, for example, '-N-' and 'w/' are each treated as one categorized character group unit, and even if the sequence of characters contains a symbol such as '-'and'/' belonging to a special categorized character group., '-' and '/' are not treated as belonging to the same categorized character group as the preceding and subsequent 'N' and 'w'. That is, priority is given to treating them as characters formed from a sequence of characters

According to the input apparatus according to an eighth aspect of the invention, based on selection histories of input keys (characters) stored in the storage unit, an input key (character) with the highest selection frequency among a plurality of input keys (characters) associated with each group is set as an initial selection target of each group. Consequently, at the time when an index is selected, the input key (character) with the highest selection frequency is selected as the initial selection target. Without requiring a plurality of operations such as, for example, an input operation for selecting the index and an input operation for selecting the input key (character) with the highest selection frequency among the plurality of input keys (characters), the input key (character) with the highest selection frequency can be selected with a single operation.

According to the input apparatus according to a ninth aspect of the invention, when a plurality of input keys (characters) associated with group corresponding to an index are displaying on a display screen, they are displayed in order of their selection frequency. This can simplify the input operation required to select a desired input key (character).

According to the input apparatus according to a tenth aspect of the invention, based on selection histories of input keys (characters) stored in the storage unit, an input key (character) with the highest selection frequency among a plurality of input keys (characters) associated with each group is set as an index of each group. Therefore, even if the user is unfamiliar with the input operation, the time required to select the input key (character) with the highest selection frequency can be shortened.

### BRIEF DESCRIPTION OF THE DRAWINGS

FIG. 1 is a constitution diagram of a navigation apparatus according to an embodiment of the invention.
FIG. 2 is a diagram of an example arrangement of an input operation unit of a navigation apparatus according to an embodiment of the invention.
FIG. 3 is a perspective view of an input operation unit of a navigation apparatus according to an embodiment of the invention.
FIG. 4 is a cross-sectional view of an input operation unit of a navigation apparatus according to an embodiment of the invention.
FIG. 5 is a diagram of an example of category character group employed in a navigation apparatus according to an embodiment of the invention.
FIG. 6 is a flowchart of an example of a character retrieval control employed in a navigation apparatus according to an embodiment of the invention.
FIG. 7 is a flowchart of an example of a route retrieval control employed in a navigation apparatus according to an embodiment of the invention.
FIG. 8 is a diagram of examples of input and output displays on a screen of a navigation apparatus according to an embodiment of the invention.
FIG. 9 is a diagram of examples of input and output displays on a screen of a navigation apparatus according to an embodiment of the invention.
FIG. 10 is a diagram of examples of input and output displays on a screen of a navigation apparatus according to an embodiment of the invention.
FIG. 11 is a constitution diagram of an input apparatus according to an embodiment of the invention.
FIG. 12A is a diagram of an example display screen of a display apparatus of an input apparatus according to an embodiment of the invention.
FIG. 12B is a diagram of an example display screen of a display apparatus of an input apparatus according to an embodiment of the invention.
FIG. 12C is a diagram of an example display screen of a display apparatus of an input apparatus according to an embodiment of the invention.
FIG 12D is a diagram of an example display screen of a display apparatus of an input apparatus according to an embodiment of the invention.

### REFERENCE NUMERALS

- 10: Navigation apparatus
- 13: Facilities data storage unit (database, information extraction unit)
- 14: Input operation unit (character input unit, input operation unit)
- 44: Retrieval controller (information extraction unit)
- 51: Display apparatus (display unit)
- 51a: Display screen
- 101: Input apparatus
- 110: Navigation apparatus
- 141: Storage unit (storage unit)
- 143: Output controller (display control unit, index display control unit, in-group character display control unit)

### BEST MODE FOR CARRYING OUT THE INVENTION

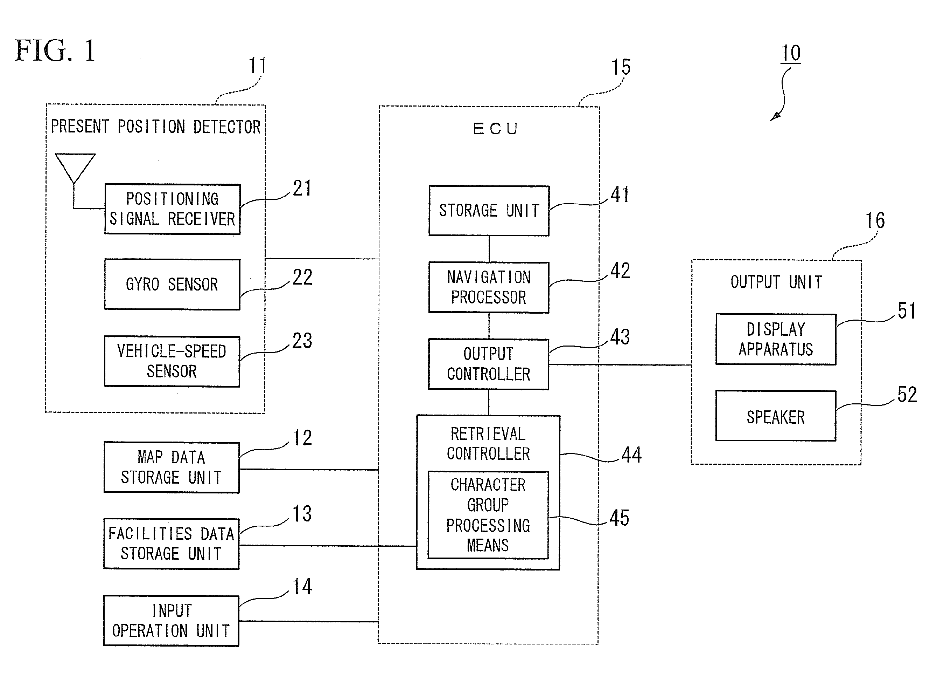

An embodiment of the invention will next be explained based on the drawings.
In this embodiment, the information retrieval apparatus according to the invention is applied in a vehicle navigation apparatus 10.
As shown in FIG. 1, the navigation apparatus 10 includes a present position detector 11, a map data storage unit 12, a facilities data storage unit 13, an input operation unit 14 (character input unit, input operation unit), an ECU 15, and an output unit 16.

The present position detector 11 includes a positioning signal receiver 21, a gyro sensor 22, and a vehicle-speed sensor 23. The positioning signal receiver 21 receives a global positioning signal such as a positioning system (GPS) signal for measuring the position of the vehicle using a satellite, and a differential (D) GPS signal that corrects an error in the GPS signal using an appropriate base station. The gyro sensor 22 detects a gradient angle with respect to the traveling direction of the vehicle or the perpendicular direction within a horizontal plane (e.g. gradient angle with respect to the perpendicular direction of the front-rear directional axis of the vehicle and yaw angle, which is the rotation angle around the up-down directional axis of the vehicle's center of gravity) and the amount of change (e.g. the yaw rate) of the gradient angle. The vehicle-speed sensor 23 detects the speed of the vehicle (vehicle speed). The present position detector 11 calculates the present position of the vehicle according to a received positioning signal, or according to an autonomous navigation calculation process based on a detection signal such as the vehicle speed and the yaw rate.

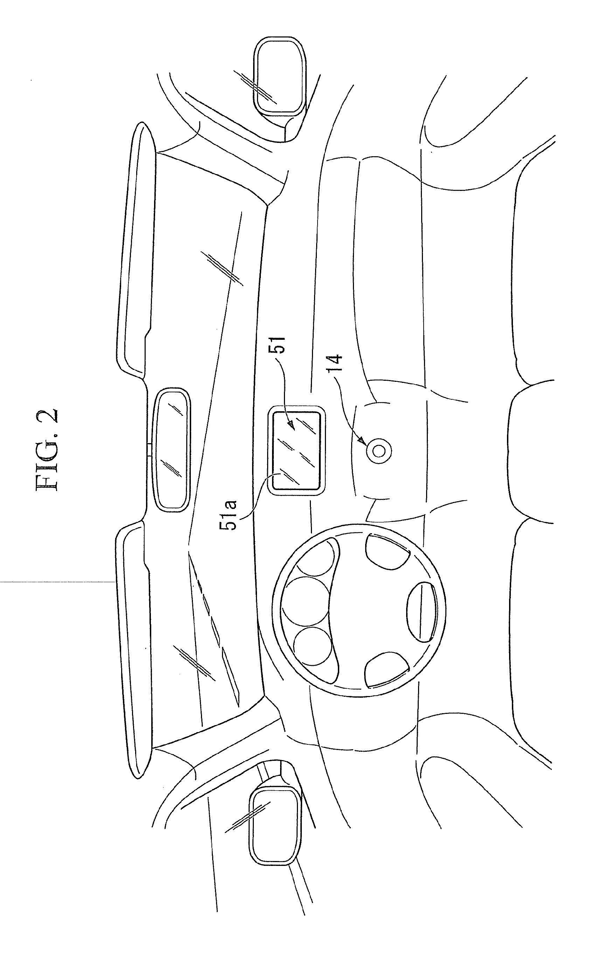

The map data storage unit 12 stores map data for displaying a map on a screen 51a (see FIG. 2) of a display apparatus (display unit) 51 of the output unit 16, and road data including information relating to the connection status, shape, and such like of a road.
The map data contains, for example, contour map data, polygon data corresponding to various types of facilities, town wards, lakes, and such like, character data of facility names, place names, and such like arranged in correspondence with the polygons, and data of various kinds of symbols.
The road data contains, for example, nodes (i.e. coordinate points for ascertaining the shape of the road), links which connect the nodes with lines, the distances of the links, and data relating to the road category, road width, intersection angles, shapes, etc.

The facilities data storage unit 13 stores character string data of names of various facilities, a facility position (e.g. coordinates of a car park belonging to the facility, coordinates of the entrance to the facility, etc.) for each facility name, a telephone number for each facility name, and so on, as points of interest (POI) data. In this embodiment, the facilities data storage unit 13 constitutes a database in this invention. Incidentally, the database in this invention is not limited to the facilities data storage unit 13, and can one of various other types of database. The following detailed explanation describes an example of retrieval from the facilities data storage unit 13.

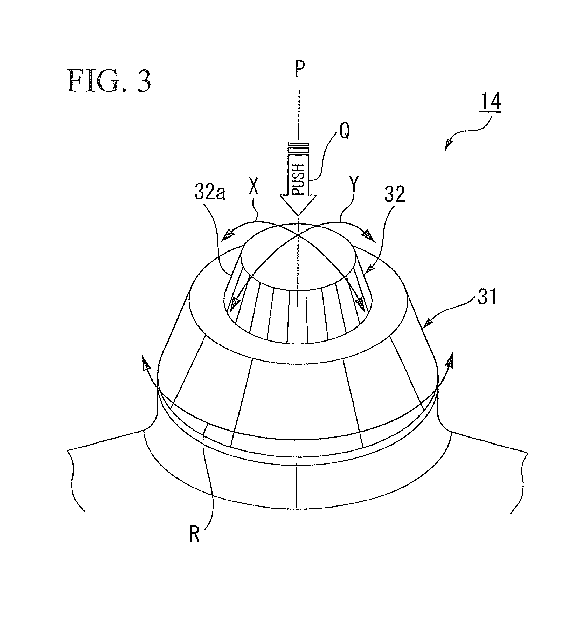

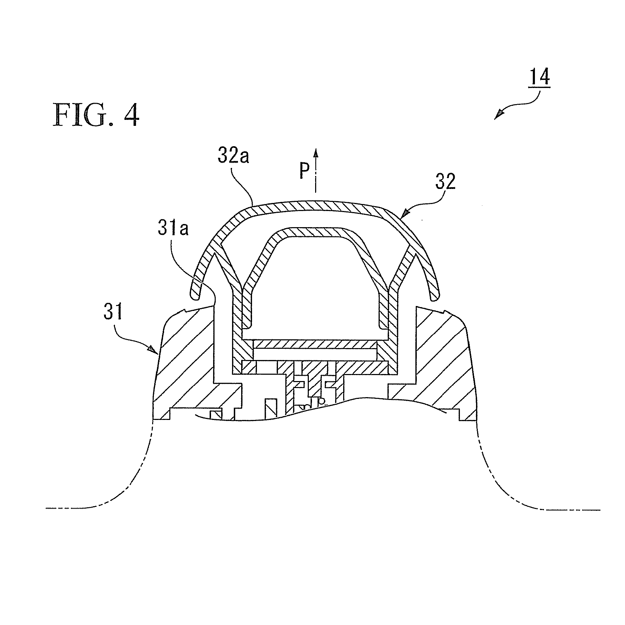

As shown in FIGS. 2 to 4, the input operation unit 14 includes a rotation operator 31 and a slide operator 32, which are provided below the display apparatus 51 and protrude to the front side of an operation panel. The rotation operator 31 is substantially cylindrical, and can be rotationally operated around an axis P (e.g. the directions indicated by arrows R in FIG. 3). The slide operator 32 is substantially columnar, and is arranged above the rotation operator 31 around the same axis as the rotation operator 31. The slide operator 32 is displaceable in the direction of the axis P and in arbitrary directions that perpendicularly intersect the axis P (e.g. directions of arrows X and Y in FIG. 3). Ahead part 32a of the slide operator 32 protrudes upwardly from an opening 31a in the top of the rotation operator 31, such that the user can apply an operating load to it using his fingertips.

The slide operator 32 is set to reference positions for the direction of axis P and the directions that perpendicularly intersect the axis P. When no operation is inputted from a user, a return mechanism (not shown) automatically returns the slide operator 32 to its reference position.
The input operation unit 14 includes a rotation sensor (not shown) such as an encoder that detects the rotation angle and the rotation speed of the rotation operator 31, and a displacement sensor (not shown) that detects displacement of the slide operator 32. In the input operation unit 14, signals of detection values outputted from the sensors are inputted to the ECU 15 shown in FIG. 1. The signals inputted to the ECU 15 are used for, for example, operations such as arrows, selection buttons, and confirmation buttons, which are outputted to the screen of the display apparatus 51, selection and confirmation of input characters, and so on.
Incidentally, the input operation unit 14 is not limited to the one described here, and can for example be a touch panel-type unit where a user performs operations such as selection and confirmation by pressing a display screen with his fingertips.

As shown in FIG. 1, the ECU 15 chiefly includes a storage unit 41, a navigation processor 42, an output controller 43, and a retrieval controller 44.

The storage unit 41 stores present position information outputted from the present position detector 11, destination information inputted by an operation of the input operation unit 14 performed by the user, and such like.

The navigation processor 42, for example, performs mapping of road data obtained from the map data storage unit 12, based on a present position outputted from the present position detector 11. In addition to this mapping, the navigation processor 42 executes processes such as route search and route guidance with respect to the destination inputted by an operation of the input operation unit 14, and outputs a control command to specify operations of the display apparatus 51 and a speaker 52 of the output unit 16.

The output controller 43, for example, controls the display apparatus 51 and the speaker 52 of the output unit 16 in accordance with control commands outputted from the navigation processor 42 and the retrieval controller 44, and an operation of the input operation unit 14.

When, for example, retrieving point of interest (POI) data stored in the facilities data storage unit 13, the retrieval controller 44 chiefly executes controls such as to check a character string inputted from the input operation unit 14 with POI character string data stored in the facilities data storage unit 13, and extract POI data containing matching characters. Here, character string check and extraction are basically performed by comparing an inputted character string with the POI character string data one character at a time starting from the head character, thereby limiting the number of extracted pieces of data. The POI data extracted by the retrieval controller 44 is then outputted via the output controller 43 to the display apparatus 51.
The retrieval controller 44 includes a character group processing unit 45 that processes inputted characters as categorized character groups, which were categorized into groups beforehand according to attributes of the characters. In this embodiment, the retrieval controller 44 that includes the character group processing unit 45, and the facilities data storage unit 13 that forms a database, together constitute an information extraction unit of the invention.

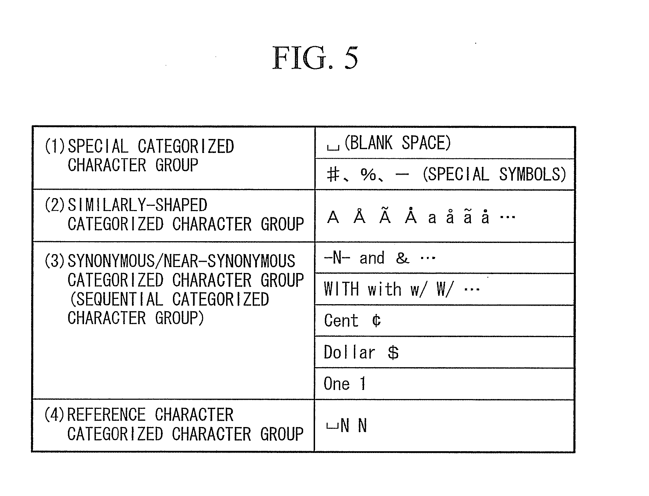

FIG. 5 is an example of predetermined categorized character groups.
The meaning of each categorized character group is as follows:
(1) Special categorized character group
   A character group containing spaces and special symbols (#, %, -) which often have no particular meaning within a character string. In the following explanation, a blank space will be treated as one of these special symbols.
(2) Similarly-shaped categorized character group
   A character group containing reference characters (A, a) and characters formed by adding diacritical marks such as umlaut to them.
(3) Synonymous/near-synonymous categorized character group (sequential categorized character group)
   A character group containing synonymous characters and sequential characters. A character group containing near-synonymous characters and sequential characters. Since the example shown here contains sequential characters, it can be termed a sequential character categorized character group.
(4) Reference character categorized character group
   A character group containing reference characters (A, a) and sequential characters in which a reference character is preceded by a special character.

These character groups are stored beforehand in the storage unit 41 and the like. When a character string is inputted through an operation of the output unit 16, the character group processing unit 45 determines which of the categorized character groups the characters of that character string belong to, and executes the following processes in accordance with the categorized character groups the characters belong to.

### (Special categorized character group)

For special symbols, instead of checking them in character units, skip to check of the next character.
(Categorized character group other than special categorized character group)
Temporarily convert all characters in the character group that the inputted character belongs to, and check all the converted characters.

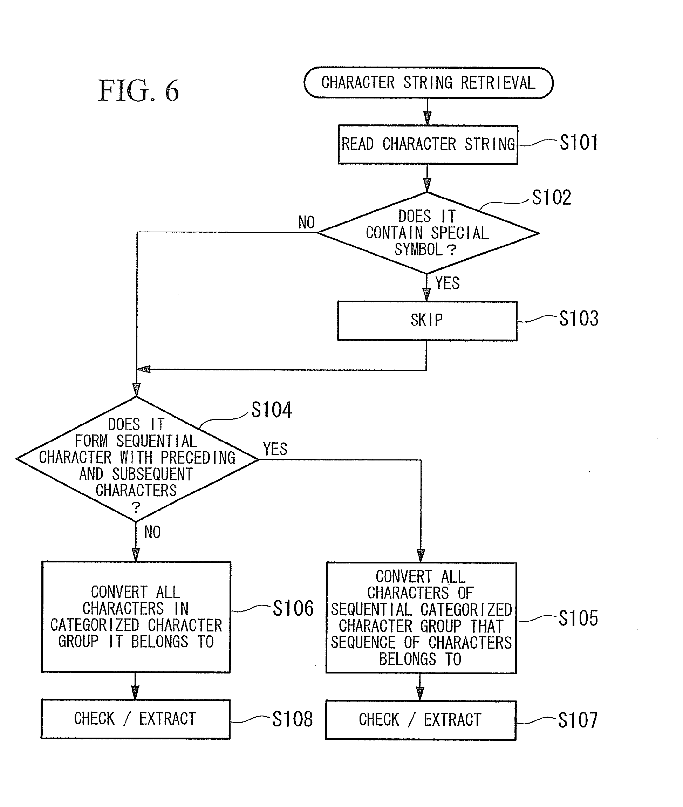

FIG. 6 is a flowchart of one example of a procedure of checking/extracting characters in an inputted character string.
The procedure of this flowchart will be explained.
In step S101, read the inputted character string, and proceed to step S102.
In step S102, determine whether the first character belongs to the special categorized character group. If it belongs to the special categorized character group, i.e. if 'Yes", proceed to step S103; if it does not belong, i.e. if 'No', proceed to step S104.
In step S103, since the first character is a special symbol, without checking, skip to the next character for check, and proceed to step S104.
In step S104, determine whether the character, in conjunction with the character strings before and after it, belongs to the sequential character categorized character group. If the character belongs, i.e. if 'Yes", proceed to step S105; if it does not belong, i.e. if 'No', proceed to step S106.
In step S105, temporarily convert all characters that belong to the sequential character categorized character group, and proceed to step S107.
In step S107, check all the converted characters with POI character string data stored in the facilities data storage unit 13.
In step S106, temporarily convert the target character to all the characters in the categorized character group which that character belongs to, and proceed to step S108.
In step S108, check all the converted characters with POI character string data stored in the facilities data storage unit 13.

Through this procedure of sequentially checking and extracting the characters of the inputted character string, the number of finally remaining pieces of POI character string data is limited.

As a concrete example, let us consider a case where the inputted character string is 'THANK'.
Firstly, character strings whose first character is one of 'special symbol + T' and 'T' are retrieved from the POI character string data.
Character strings wherein one of 'special symbol + T' and 'T' is followed by 'special symbol + H' and 'H' are then retrieved from the hit data.
Character strings wherein one of 'special symbol + H' and 'H' is followed by 'special symbol + A', 'A', 'special symbol + Å' 'Å', ... and so on, are retrieved from the hit data.
Character strings wherein one of 'special symbol + N' and 'N' follows are retrieved from the hit data of the previous character retrieved. Lastly, character strings wherein one of 'special symbol + K' and 'K' follows are retrieved from the hit data, and the retrieval result is outputted to the display apparatus 51.

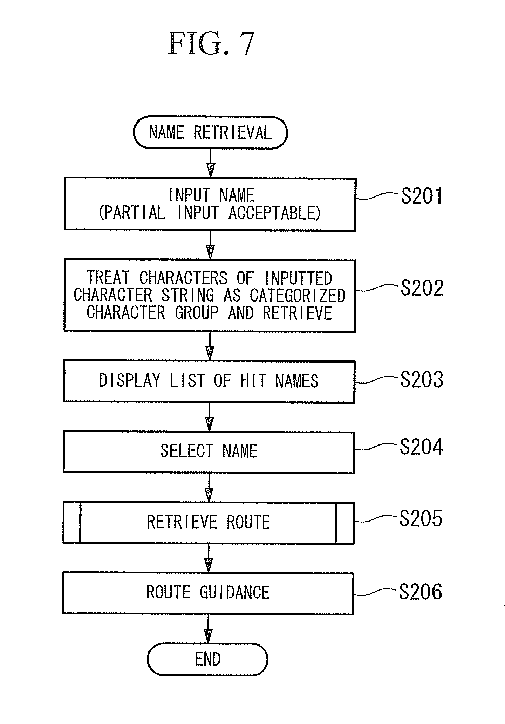

In the abovementioned constitution, when obtaining guidance regarding a route from the navigation apparatus 10 based on a facility name, the flow of the processing is that of, for example, the flowchart in FIG. 7.
In step S201, input a name for retrieval through the input operation unit 16, and proceed to step S202.
In step S202, extract POI character string data that corresponds to the inputted character string through the character group process described earlier, and proceed to step S203.
In step S203, output the extracted POI character string data to the display apparatus 51, and proceed to step S204.

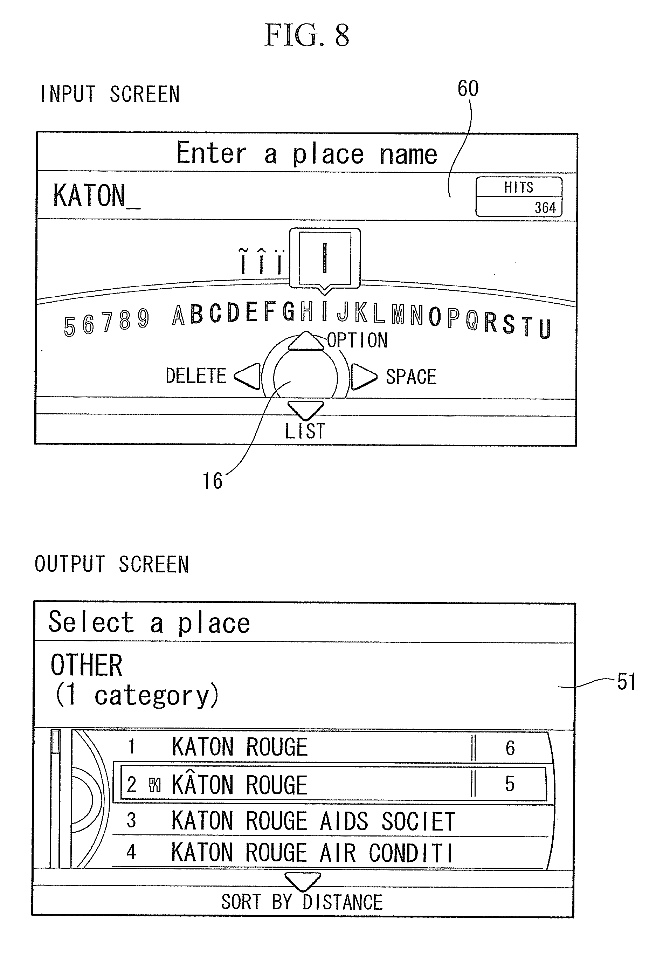

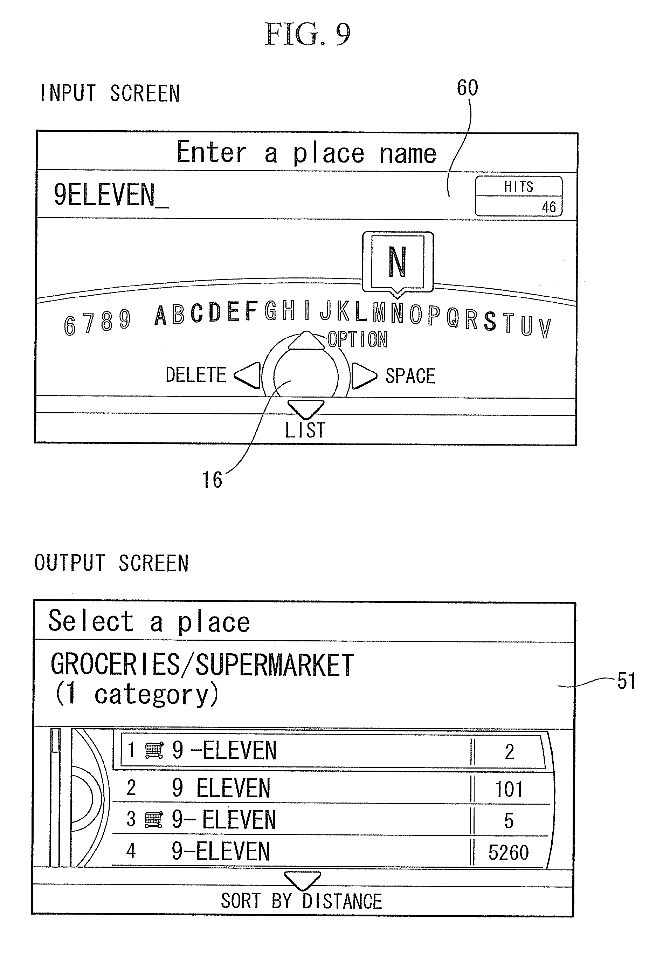

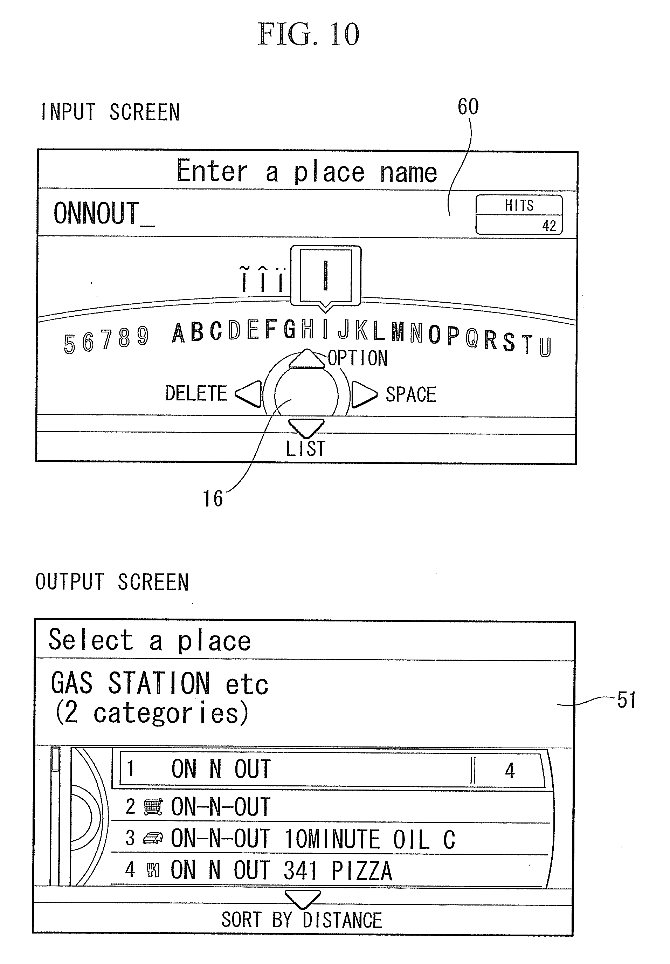

FIGS. 8, 9, and 10 are concrete examples showing comparisons between an input screen of an input panel 60 when an inputted character string is inputted from the input operation unit 16, and an output screen of the display apparatus 51 which the retrieval result list is outputted to. In the example of FIG. 8, the inputted character string is 'KATON', in FIG. 9 it is '9ELEVEN', and in FIG. 10 it is 'ONNOUT'. Thus, even when a character string is inputted in a most simple manner, a list of character string data containing special characters, similarly-shaped characters, and such like, with no omissions, is outputted to the screen.
In step S204, the user selects the item he desires from the displayed list, and proceeds to step S205.
In step S205, retrieve a route for guidance, and proceed to step S206.
In step S206, display the retrieved route on the display apparatus 51.

The navigation apparatus 10 treats characters in a character string inputted when retrieving character string data as categorized character groups. Accordingly, even if the inputted character string and the character string for retrieval contain characters such as special symbols, similarly-shaped characters, synonyms, near-synonyms, and sequential characters, a list of the character string data desired by the user can be displayed reliably and without omissions.

The embodiment described above performs a process in regard to the characters contained in a character string inputted from the input operation unit 16, such as using the retrieval controller 44 to convert all the characters which are contained in a character group. However, instead of converting the characters in the inputted character string, data of constitutive characters that constitute the categorized character group corresponding to each character (e.g. the data of constitutive characters shown in FIG. 5) can be superimposed on character string data on the database side, such as that in the facilities data storage unit 13.
In this case, the same list can be displayed with no omissions as in the above embodiment, without performing a special conversion process on the inputting side.
It also becomes possible to treat the inputted character string and the character string stored on the database side as categorized character groups.

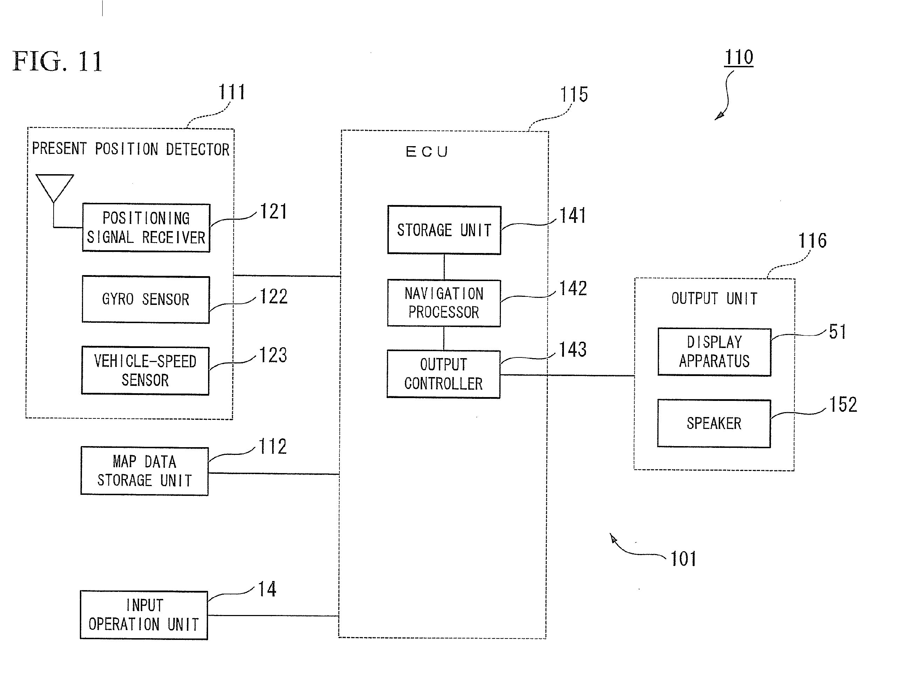

Subsequently, an embodiment of an input apparatus of the invention will be explained with reference to the drawings.
As shown by way of example in FIG. 11, an input apparatus 101 according to an embodiment of the invention is installed in a navigation apparatus 110. The navigation apparatus 110 includes, for example, a present position detector 111, a map data storage unit 112, an input operation unit 14, an ECU 115, and an output unit 116. The input apparatus 101 includes, for example, the input operation unit 14, the ECU 115, and the output unit 116.

The present position detector 111 includes a positioning signal receiver 121, a gyro sensor 122, and a vehicle-speed sensor 123. The positioning signal receiver 121 receives a global positioning signals such as a positioning system (GPS) signal for measuring the position of the vehicle using a satellite, and a differential (D) GPS signal that corrects an error in the GPS signal using an appropriate base station. The gyro sensor 122 detects a gradient angle with respect to the traveling direction of the vehicle or the perpendicular direction within a horizontal plane (e.g. gradient angle with respect to the perpendicular direction of the front-rear directional axis of the vehicle and yaw angle, which is the rotation angle around the up-down directional axis of the vehicle's center of gravity) and the amount of change (e.g. the yaw rate) of the gradient angle. The vehicle-speed sensor 123 detects the speed of the vehicle (vehicle speed). The present position detector 111 calculates the present position of the vehicle according to a received positioning signal, or according to an autonomous navigation calculation process based on a detection signal such as the vehicle speed and the yaw rate.

The map data storage unit 12 stores map data for displaying a map on a screen 51a of a display apparatus 51 of the output unit 116, and road data including information relating to the connection status, shape, and such like of a road.
The map data contains, for example, contour map data, polygon data corresponding to various types of facilities, town wards, lakes, and such like, character data of facility names, place names, and such like arranged in correspondence with the polygons, and data of various kinds of symbols.
The road data contains, for example, nodes (i.e. coordinate points for ascertaining the shape of the road), links which connect the nodes with lines, the distances of the links, and data relating to the road category, road width, intersection angles, shapes, etc.

The ECU 115 includes, for example, a storage unit 141, a navigation processor 142, and an output controller 143.

The storage unit 141 stores, for example, present position information outputted from the present position detector 111, and a destination which is set through an input operation performed by the user with respect to the input operation unit 14.
Furthermore, in accordance with, for example, an input operation performed by the user with respect to the input operation unit 14, the storage unit 141 store of a plurality of destinations as a final destination, and stores destinations other than this final destination as way-stops between the present position and the final destination. In addition, the storage unit 141 stores way-stop sequences set for all the destinations.
Moreover, in accordance with a command signal corresponding to, for example, an input operation performed by the user with respect to the input operation unit 14, the storage unit 141 stores a selection history for a plurality of input keys displayed in a selectable state on the display screen 51a of the display apparatus 51 of the output unit 116.

The navigation processor 142, for example, performs mapping of road data obtained from the map data storage unit 112, based on a present position outputted from the present position detector 111. In addition to this mapping, the navigation processor 142 executes processes such as route search and route guidance with respect to the destination inputted by an operation of the input operation unit 14, and outputs a control command to specify operations of the display apparatus 51 and a speaker 152 of the output unit 116.
The output controller 143 controls the display apparatus 51 and the speaker 152 of the output unit 116 in accordance with, for example, control commands outputted from the navigation processor 142 or with an input operation performed by the user with respect to the input operation unit 14.

The input apparatus 101 installed in the navigation apparatus 110 according to this embodiment is configured as described above.
Subsequently, there will be explained an operation of the input apparatus 101, in particular, an operation of displaying a plurality of input keys on the display screen 51a of the display apparatus 51 of the output unit 116.

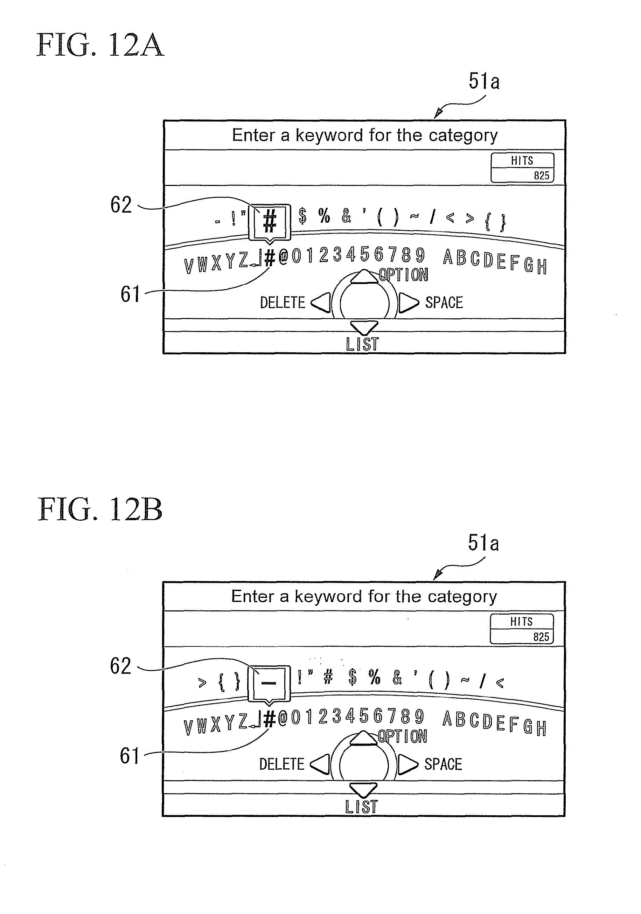

As shown by way of example in FIGS. 12A to 12D, in the input state of symbol contained in a character in the navigation apparatus 110, the output controller 143 of the ECU 115 displays a plurality of input keys, which are selectable in accordance with an operation performed by the user with respect to the input operation unit 14, on the display screen 51a of the display apparatus 51 of the output unit 116.
As for example in the display screen 51a shown in FIG. 12A, in a predetermined setting made at the time of factory shipment of the navigation apparatus 110, there are displayed a plurality of selectable input keys, such as a predetermined index 61 (e.g. '#') of a group which every character of the alphabet, every number from zero to 9, and a plurality of symbols, are associated with. According to this setting, when the user selects a predetermined index 61 (e.g. '#') of a group which this plurality of input keys are associated with, the selected predetermined index 61 is highlighted, and the plurality of input keys (e.g. '-', '!', ..., '{', '}', etc.) associated with the group corresponding to that index 61 are, for example, displayed above all the characters of the alphabet, all the numbers, and the index 61; in addition, an index key (e.g. '#') that is equivalent to one of the plurality of input keys (e.g. index 61) is, for example, highlighted above the index 61 in a state of being selected by an input operation performed by the user with respect to the input operation unit 14. In this state, when the user executes, for example, a rotation operation around the axis P with respect to the rotation operator 31 of the input operation unit 14, the input keys selected by the input operation performed by the user with respect to the input operation unit 14 are sequentially switched in the plurality of input keys (e.g. '-', '!',..., '{','}', etc.).

In accordance with the selection history showing the selection of the plurality of input keys by the user stored in the storage unit 141, the output controller 143 sets an input key with the highest selection frequency among the plurality of input keys associated with each group as an initial selection target 62 of that group. Thus, as shown for example in the display screen 51a of FIG. 12B, the input key with the highest selection frequency (e.g. '-') among the plurality of input keys (e.g. '-', '!',..., '{', '}', etc.) associated with a group corresponding to the index 61 (e.g. '#') in a predetermined setting made at the time of factory shipment of the navigation apparatus 110 is set as a new initial selection target 62.

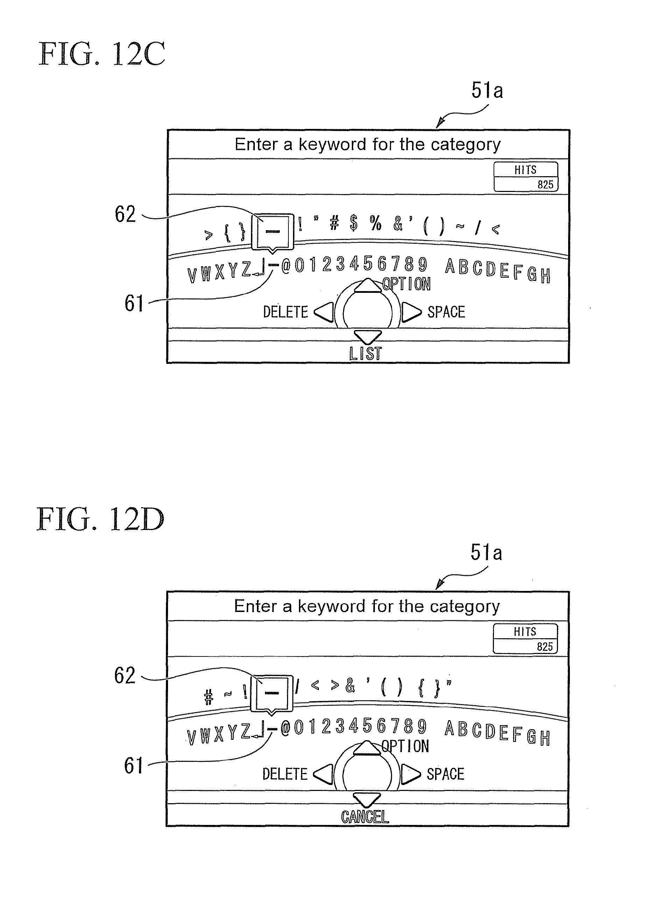

Moreover, the output controller 143 sets the input key with the highest selection frequency among the plurality of input keys associated with each group as the index 61 of each group.
As shown for example in the display screen 51a of FIG. 12C, the input key with the highest selection frequency (e.g. '-') among the plurality of input keys (e.g. '-', '!',..., '{', '}', etc.) associated with a group corresponding to the index 61 (e.g. '#') in a predetermined setting made at the time of factory shipment of the navigation apparatus 110 is set as a new index 61.

In accordance with the selection history showing the selection of the plurality of input keys by the user stored in the storage unit 141, the output controller 143 displays the plurality of input keys associated with each group in order of their selection frequency.
Thus, as shown for example in the display screen 51a of FIG. 12D, the plurality of input keys (e.g. '-', '!',..., '{', '}', etc.) associated with a group for which, instead of the index 61 (e.g. '#') according to a predetermined setting made at the time of factory shipment of the navigation apparatus 110, a new index 61 has been set according to the input key (e.g. '-') with the highest selection frequency, are displayed in order based on their selection frequency (e.g. '-', '/', '<', '>', '&', '", '(' , ')', '{' , '}', '"', '#', '∼', '!'), rather than in the arrangement of the predetermined setting made at the time of factory shipment (e.g. '-', '!', '"', '#', '$', '%' '&', '", '(',')', '∼', '/', '<', '>', '{' , '}',).

As described above, according to the input apparatus 101 according to an embodiment of the invention, based on a selection history of the input keys stored in the storage unit 141, the input key with the highest selection frequency among the plurality of input keys associated with each group is set as the initial selection target 62. Thus, at the time when the index 61 is selected, the input key with the highest selection frequency is selected as the initial selection target 62, and there is no need for plurality of operations such as, for example, an input operation for selecting the index 61 and an input operation for selecting the input key with the highest selection frequency among the plurality of input keys. Therefore, the input operation required to select the input key with the highest selection frequency can be simplified, and the input apparatus 101 can be made more convenient.
Moreover, based on a selection history of the input keys stored in the storage unit 141, the input key with the highest selection frequency among the plurality of input keys associated with each group is set as the index 61 of that group. Thus, even if the user is unfamiliar with the input operation, the time required to select the input key with the highest selection frequency can be shortened, and the input apparatus 101 can be made more convenient.
When displaying a plurality of input keys associated with a group corresponding to an index 61, the plurality of input keys are displayed according to their selection frequency. This can simplify the input operation required to select a desired input key.

The invention is not limited to the embodiment described above, and can be modified in various ways without deviating from its main points. For example, the information retrieval apparatus can be applied in apparatuses other than a vehicle navigation apparatus.

### INDUSTRIAL APPLICABILITY

According to the information retrieval apparatus of the invention, even if inputted character strings and character strings stored in a database contain special symbols, characters, and such like, data that the user desires can be reliably extracted from the database. Further, according to an input apparatus of the invention, an operation required to select a character can be simplified, and the apparatus can be made more convenient.

## Claims

1. An information retrieval device comprising:
an input operation unit that can input a character through an operation of a user;
a database that stores data of a plurality of character strings beforehand;
an information extraction unit that checks a character string inputted by the input operation unit with the data of the character strings stored in the database, and extracts the data of a character string corresponding to the character string inputted by the input operation unit from the database; and
a display unit that displays the character string extracted by the information extraction unit; wherein
the information extraction unit performs the check by replacing each character in at least one of the character string inputted by the input operation unit and the character strings stored in the database with a character contained in a classified character group predetermined in compliance with an attribute of each character.

2. The information retrieval apparatus according to claim 1, wherein
the information extraction unit treats each character contained in at least one of the character string inputted by the input operation unit and the character strings stored in the database as the categorized character group.

3. The information retrieval apparatus according to claim 1, wherein
when a character string being checked contains a special symbol belonging to a predetermined special categorized character group, the information extraction unit does not check the special symbols in a one-character unit.

4. The information retrieval apparatus according to claim 1, wherein
when a character string being checked contains a sequence of characters belonging to a sequential character categorized character group, the information extraction unit performs the collection by replacing the sequence of characters with a sequence of characters contained in the sequential character categorized character group.

5. The information retrieval apparatus according to claim 1, wherein
in the information extraction unit, similar-shaped characters, and synonymous or near-synonymous characters, and character strings are each contained in a same the categorized character group.

6. The information retrieval apparatus according to claim 1, wherein
when a character string being checked contains a special symbol belonging to a predetermined special categorized character group, the information extraction unit does not perform the check by checking the special symbol in a one-character unit, and instead performs the check by replacing a combination of the special symbol and a subsequent character thereof with characters contained in a categorized character group which the subsequent character belongs to.

7. The information retrieval apparatus according to claim 1, wherein
when a character string being checked contains a special symbol belonging to a predetermined special categorized character group, and this special symbol together with preceding and subsequent characters thereof form a sequence of characters that belong to a sequential character categorized character group,
the information extraction does not perform the check of replacing a combination of the special symbol and a subsequent character thereof with characters contained in a categorized character group which the subsequent character belongs to, and instead performs the check by replacing the sequence of characters with a sequence of characters contained in the sequential character categorized character group.

8. An input apparatus comprising:
a display unit that displays a selectable character;
a display control unit that makes the display unit display the character;
an input operation unit that can input a character through an operation of a user; and
a storage unit that stores a selection histories of characters selected by the input operation unit;
the display control unit comprising:
an index display control unit that sets one character contained in each of a plurality of characters divided into a plurality of groups as an index of each of the groups, and makes the display unit display it in a selectable manner; and
an in-group character display control unit that makes the display unit display a plurality of characters contained in a group corresponding to an index selected through an operation of a user from among the indexes displayed by the display unit, and in addition, highlights any one of the plurality of characters contained in a group corresponding to the selected index as an initial selection target of that group; wherein
based on a selection history of each of the characters, the in-group character display control unit sets a character with the highest selection frequency among a plurality of characters contained in the group as the initial selection target.

9. The input apparatus according to claim 8, wherein
based on a selection history of each of the characters, the in-group character display control unit displays a plurality of characters contained in the group in order of their selection frequencies.

10. The input apparatus according to claim 8, wherein
based on a selection history of each of the characters, the input display control unit sets a character with the highest selection frequency among a plurality of characters contained in the group as the index of the group.
